(19) Europäisches Patentamt
European Patent Office
Office européen des brevets

(11) **EP 3 163 582 B1**

(12) **FASCICULE DE BREVET EUROPEEN**

(45) Date de publication et mention
de la délivrance du brevet:
**14.03.2018 Bulletin 2018/11**

(51) Int Cl.:
***G21K 1/02*** *(2006.01)*

(21) Numéro de dépôt: **16196005.9**

(22) Date de dépôt: **27.10.2016**

(54) **DISPOSITIF COMPRENANT UN COLLIMATEUR POUR LA SPECTROMÉTRIE DE DIFFRACTION X ET SON UTILISATION**

VORRICHTUNG MIT EINEM KOLLIMATOR FÜR DIE RÖNTGENBEUGUNGS-SPEKTROMETRIE UND IHRE ANWENDUNG

DEVICE COMPRISING A COLLIMATOR FOR X-RAY DIFFRACTION SPECTROMETRY AND ITS USE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.10.2015 FR 1560443**

(43) Date de publication de la demande:
**03.05.2017 Bulletin 2017/18**

(73) Titulaire: **Commissariat à l'Énergie Atomique et aux Énergies Alternatives
75015 Paris (FR)**

(72) Inventeurs:
• **MARTICKE, Fanny**
  **38000 GRENOBLE (FR)**
• **MONTEMONT, Guillaume**
  **38000 GRENOBLE (FR)**
• **PAULUS, Caroline**
  **38000 GRENOBLE (FR)**

(74) Mandataire: **GIE Innovation Competence Group
310, avenue Berthelot
69372 Lyon Cedex 08 (FR)**

(56) Documents cités:
**WO-A1-97/33141    DE-A1- 2 351 450
FR-A- 1 561 351**

**Description**

## DOMAINE TECHNIQUE

Le domaine technique de l'invention est la caractérisation d'un objet par une analyse spectrométrique d'un rayonnement ionisant diffracté par ledit objet. L'invention s'applique aussi bien à l'analyse de tissus biologiques, à des fins de diagnostic, qu'au contrôle non destructif dans le domaine industriel ou pour des applications liées à la sécurité.

## ART ANTERIEUR

La spectrométrie de diffraction X, plus connue selon l'acronyme EDXRD (Energy Dispersive X Ray Diffraction) est une technique d'analyse non destructive fréquemment utilisée pour l'identification de matériaux composant un objet. Cette technique est basée sur la diffusion élastique d'un rayonnement électromagnétique ionisant, aussi appelée diffusion Rayleigh. Elle a déjà été appliquée dans le contrôle de matières nucléaires, dans la détection d'explosifs ou d'autres substances illicites. D'une façon générale, cette technique consiste à irradier un objet à l'aide d'un rayonnement X polyénergétique et à déterminer le spectre en énergie du rayonnement diffusé, par l'objet, selon de faibles angles, typiquement compris entre 1° et 20°, par rapport à la trajectoire du rayonnement X incident à l'objet. L'analyse de ce spectre permet d'identifier les matériaux constituant un objet. En effet, la plupart des matériaux présentent une signature spectrale déterminée, dépendant de leur structure atomique ou moléculaire. La comparaison des spectres de diffusion mesurés avec des signatures de matériaux connus permettent de remonter à la composition de l'objet.

Dans les dispositifs connus jusqu'à ce jour, une source d'irradiation produit un rayonnement X polyénergétique se propageant vers un objet, un collimateur primaire, ou pré-collimateur étant disposé entre la source et l'objet, de façon à diriger un rayonnement X finement collimaté vers l'objet. Un deuxième collimateur est ensuite placé entre l'objet analysé et un détecteur, ce dernier étant apte à acquérir un spectre en énergie du rayonnement diffusé par l'objet. Différentes formes de ce deuxième collimateur ont été proposées. Il peut s'agir :

- d'une simple ouverture pratiquée dans un matériau dense, comme décrit dans la demande WO2013098520; La sensibilité de la mesure est limitée par la dimension de ladite ouverture, cette dernière agissant de la même manière qu'un sténopé pour des applications optiques.
- de canaux s'étendant parallèlement les uns aux autres, comme décrit dans le brevet US7835495B2 ; cela limite considérablement la plage angulaire adressée par le dispositif.
- de canaux convergents tous vers un même point, comme décrit dans la publication Malden, «A CdZnTe array for détection of explosives in baggage by energy-dispersive X-ray diffraction signatures at multiple scatter angles », Nuclear Instruments and Method in Physics Research A (2000). Cette technique est sensible, mais nécessite un balayage point par point de l'objet examiné.

Des études récentes ont montré que la spectrométrie de diffraction X était potentiellement utilisable dans le domaine du diagnostic médical, afin de discriminer un tissu sain d'une tumeur cancéreuse. Des études ont en effet montré que la signature d'un tissu sain était différente de la signature d'une tumeur. En mammographie, par exemple, la publication Kidane,G et al «X-ray scatter signatures for normal and neoplastic breast tisse » Physics in Medicine and Biology, n° 44, 1999 pp 1791-1802, a établi une différence nette entre des spectres de diffraction X obtenus respectivement sur des tissus sains, des tissus fibroglandulaires et une tumeur maligne de type carcinome. Les tissus sains ou fibroglandulaires présentent un pic vers $1.1$ nm$^{-1}$, tandis que les tissus cancéreux présentent un pic vers $1.6$ nm$^{-1}$. L'unité nm$^{-1}$ représente un transfert de quantité de mouvement, que l'on obtient connaissant l'énergie du rayonnement diffusé et son angle de diffusion, selon des principes connus et rappelés ci-après.

Cependant, les possibilités d'application sur êtres vivants se heurtent à des difficultés liées à la dose intégrée et à la durée d'un examen. En effet, à l'heure où l'optimisation de la dose reçue par un patient devient une préoccupation importante, il est nécessaire de proposer une méthode d'analyse offrant un compromis entre la sensibilité et la dose intégrée. En outre, les tissus analysés peuvent avoir un volume important, et il est nécessaire que le volume analysé, en une seule acquisition, soit optimal, de façon à limiter autant que possible un balayage autour d'un organe à examiner. L'invention répond à ces exigences.

## EXPOSE DE L'INVENTION

Un objet de l'invention est un dispositif d'analyse d'un objet, comportant :

- une source d'irradiation, apte à produire un rayonnement électromagnétique ionisant se propageant jusqu'à un support apte à recevoir l'objet;

- un premier collimateur, disposé entre la source d'irradiation et le support, le premier collimateur présentant une ouverture apte à former un faisceau collimaté se propageant selon un axe de propagation, vers le support;
- un détecteur, comprenant des pixels, chaque pixel étant apte à détecter un rayonnement électromagnétique ionisant, et à en former un spectre en énergie;
- un deuxième collimateur, disposé entre le support et le détecteur, le deuxième collimateur étant apte à diriger sélectivement un rayonnement émis par l'objet, maintenu par le support, vers le détecteur, en fonction d'un angle de diffusion du rayonnement émis par l'objet;

caractérisé en ce que :

le deuxième collimateur s'étend, entre une première extrémité et une deuxième extrémité, autour d'un axe central, le deuxième collimateur comportant une pluralité de canaux, chaque canal étant délimité par des parois latérales, le deuxième collimateur étant tel que :

- chaque canal comporte un axe médian, ledit axe médian s'étendant, au centre du canal, entre lesdites parois latérales délimitant ledit canal ;
- l'axe médian de chaque canal forme un angle aigu, dit angle de collimation du canal, avec l'axe central du collimateur ;
- à chaque canal est associé un point, dit point focal, formé par une intersection entre l'axe médian dudit canal et l'axe central du collimateur ;

le deuxième collimateur comportant au moins deux canaux, dont les angles de collimation sont différents, les points focaux respectivement associés à ces canaux étant différents et espacés l'un de l'autre selon l'axe central, de telle sorte que chaque canal transmet au détecteur un rayonnement émis par un volume élémentaire de l'objet, disposé sur le support, s'étendant autour d'un point focal défini par le deuxième collimateur, selon une plage angulaire prédéterminée.

Le deuxième collimateur, lorsqu'il est placé entre un objet irradié par un rayonnement électromagnétique ionisant, et un détecteur, permet de transmettre au détecteur un rayonnement émis par l'objet, et notamment un rayonnement diffusé, selon différents angles. Par ailleurs, le fait de disposer de plusieurs points focaux différents permet la détection simultanée d'un rayonnement émis par différentes parties de l'objet. Lorsque le rayonnement émis est un rayonnement de diffusion, cela permet de caractériser simultanément ces différentes parties sans avoir à déplacer le collimateur relativement à l'objet. Ainsi, chaque canal du deuxième collimateur transmet au détecteur un rayonnement émis par un volume élémentaire de l'objet, disposé sur le support, ledit volume élémentaire s'étendant autour d'un point focal défini par ledit deuxième collimateur, selon une plage angulaire prédéterminée. De préférence, au moins deux points focaux sont espacés l'un de l'autre, selon l'axe central du collimateur, d'une distance supérieure à 2 cm, voire 4 cm.

Le deuxième collimateur peut comporter les caractéristiques suivantes, prises isolément ou selon les combinaisons techniquement réalisables :

- le deuxième collimateur comporte une pluralité de canaux de même angle de collimation, les canaux s'étendant autour de l'axe central du collimateur, de telle sorte que les points focaux des canaux de même angle de collimation sont confondus;
- au moins un canal présente une section transversale, dans un plan perpendiculaire à l'axe central, formant tout ou partie d'un anneau autour de l'axe central ; l'anneau peut être polygonal ou circulaire;
- chaque paroi latérale délimitant un canal du deuxième collimateur est réalisée selon un matériau dont le numéro atomique est supérieur à 26;
- chaque canal du deuxième collimateur étant délimité par une paroi latérale dite proximale et une paroi latérale dite distale, la paroi proximale étant plus proche de l'axe central que la paroi distale, chacune de ces parois s'étend, entre une première extrémité du canal et une deuxième extrémité du canal, en formant une surface tronconique définie :

  - par un sommet, situé sur l'axe central du deuxième collimateur;
  - et, au niveau de ladite deuxième extrémité du canal, par une génératrice décrivant un tout ou partie d'un anneau;

- le deuxième collimateur comporte une paroi dite de base, s'étendant autour de l'axe central du deuxième collimateur, en décrivant un cylindre ou un tronc de cône, d'épaisseur supérieure à 5 mm. Une telle paroi de base peut-être pleine ou comporter une cavité creuse, s'étendant selon un axe médian confondu avec l'axe central du collimateur.

Le dispositif peut comporter l'une des caractéristiques suivantes, prises isolément ou selon les combinaisons techniquement réalisables :

- le rayonnement ionisant émis par la source est un rayonnement poly-énergétique, la source étant par exemple un tube émetteur de rayons X ;
- le deuxième collimateur est disposé de telle sorte que son axe central est coaxial de l'axe de propagation du faisceau incident collimaté ;
- le détecteur s'étend selon un plan, dit plan de détection, perpendiculaire audit axe central du deuxième collimateur. Plusieurs pixels sont alors disposés à une même distance, dite distance radiale, dudit axe central du deuxième collimateur.
- Le détecteur est lié à un calculateur, tel un microprocesseur, apte à subdiviser chaque pixel du détecteur en pixels dits virtuels.

La combinaison des caractéristiques mentionnées dans les quatre alinéas précédents est préférée. Le dispositif peut comporter un objet à analyser, disposé sur le support, de telle sorte qu'au moins un point focal, et de préférence plusieurs points focaux, définis par le deuxième collimateur, soient placés dans l'objet.

Un autre objet de l'invention est un procédé d'analyse d'un objet, de préférence à l'aide du dispositif précédemment décrit, comprenant les étapes suivantes :

a) disposition de l'objet sur le support du dispositif et irradiation de l'objet à l'aide de la source d'irradiation, de façon à former un faisceau incident collimaté se propageant vers l'objet selon un axe de propagation, l'objet étant disposé de telle sorte que plusieurs points focaux définis par le deuxième collimateur, soient placés dans ledit objet ;
b) à l'aide de chaque pixel du détecteur, détection d'un rayonnement diffusé par l'objet suite à son irradiation par ledit faisceau incident collimaté et formation d'un spectre représentatif d'une distribution en énergie dudit rayonnement détecté ;
c) définition d'une pluralité de groupes de pixels, chaque groupe de pixel recevant un rayonnement de diffusion d'un même élément de volume de l'objet, ledit élément de volume étant disposé selon l'axe de propagation, deux groupes de pixels différents recevant un rayonnement de diffusion de deux éléments de volumes différents;
d) pour chaque groupe de pixel défini lors de l'étape précédente, combinaison du spectre acquis par chaque pixel, de façon à établir un spectre, dit spectre combiné associé audit groupe de pixel ;
e) à l'aide des spectres combinés respectivement associés à différents groupes de pixels, détermination d'une nature du matériau constituant chaque élément de volume de l'objet.

L'axe central du deuxième collimateur est de préférence confondu avec l'axe de propagation du faisceau collimaté. Le détecteur s'étend de préférence perpendiculairement à l'axe du collimateur, chaque groupe de pixel comportant des pixels situés à une même distance, dite distance radiale, dudit axe central du collimateur. L'objet peut notamment être un tissu biologique. L'invention permet alors de caractériser la nature du tissu de manière non invasive.

La direction du faisceau incident collimaté peut être définie à partir d'un a priori résultant d'une inspection préalable de l'objet. Cette inspection préalable peut être réalisée par radiographie X ou tomographie X ou échographie ou Imagerie par Résonnance Magnétique.

D'autres avantages et caractéristiques ressortiront plus clairement de la description qui va suivre de modes particuliers de réalisation de l'invention, donnés à titre d'exemples non limitatifs, et représentés aux dessins annexés décrits ci-après.

## FIGURES

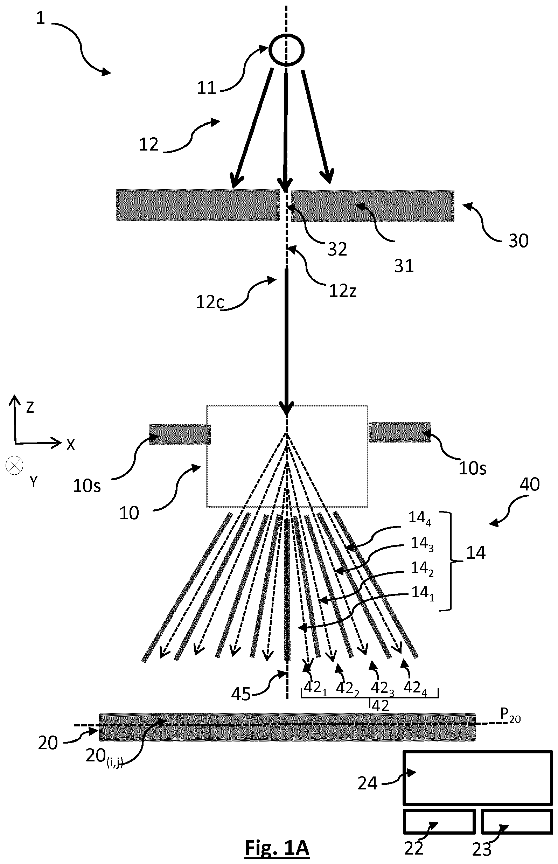

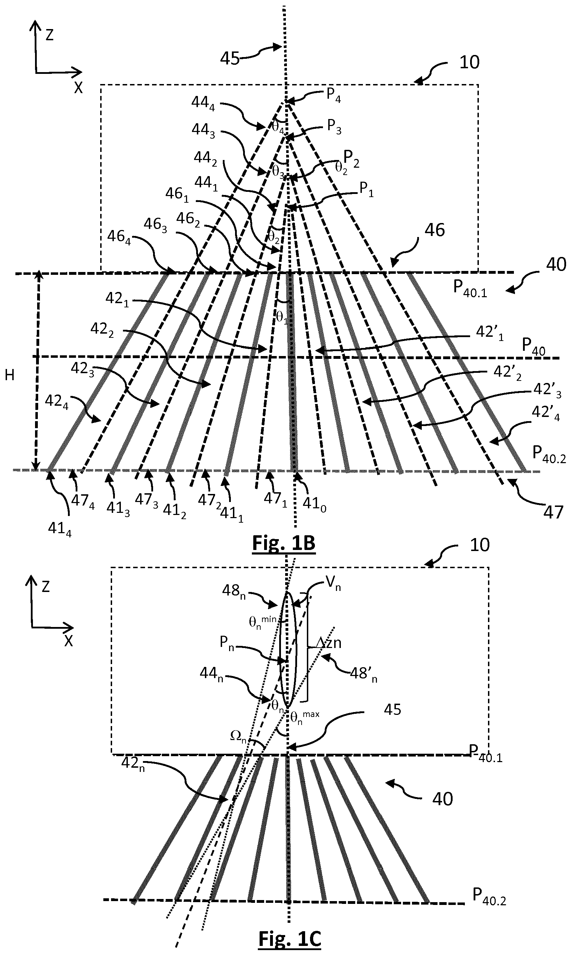

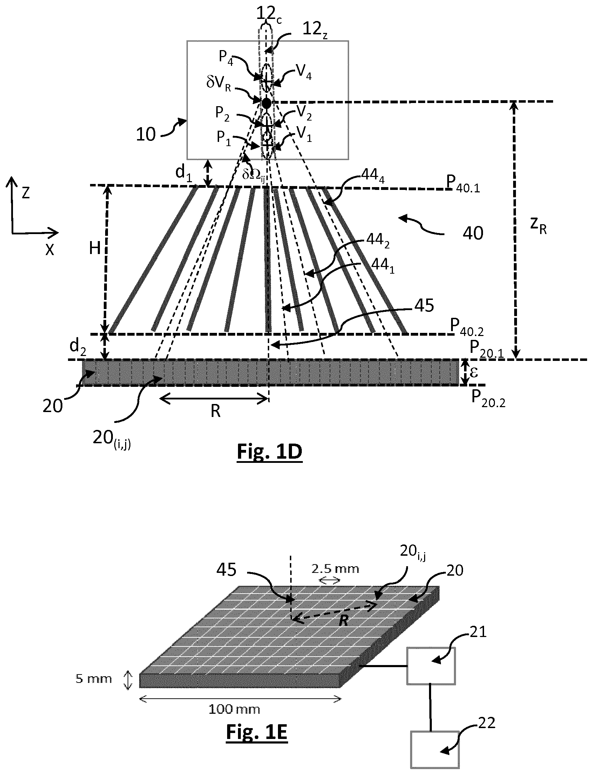

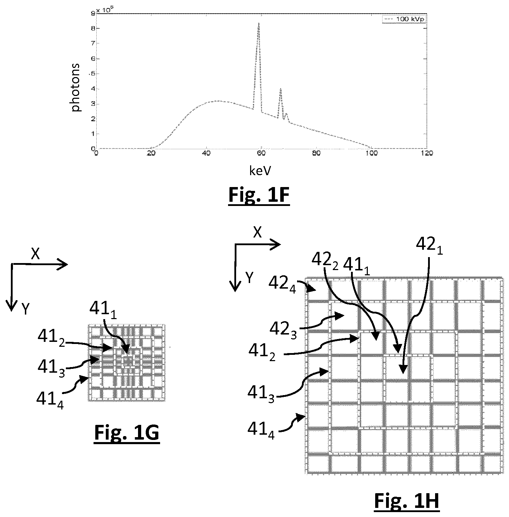

La figure 1A représente un exemple de dispositif d'analyse d'un matériau selon l'invention. La figure 1B représente un premier mode de réalisation de collimateur, en vue de coupe, du dispositif décrit en lien avec la figure 1A. La coupe est effectuée selon un plan parallèle à l'axe central du collimateur et passant par cet axe. La figure 1C représente un détail d'un volume élémentaire d'un objet observé par un canal. La figure 1D représente les volumes élémentaires d'un l'objet associé à différents canaux, ainsi qu'un élément de volume associé à un pixel du détecteur. La figure 1E représente un exemple de détecteur. La figure 1F représente un exemple de spectre d'un rayonnement émis par une source d'irradiation. Les figures 1G et 1H représentent des coupes du premier mode de réalisation de collimateur, selon un plan perpendiculaire à l'axe central du collimateur.

La figure 2A représente un deuxième mode de réalisation de collimateur apte à être utilisé dans le dispositif représenté sur la figure 1A. Les figures 2B et 2C représentent des vues de coupe de ce collimateur, selon un plan perpendiculaire à son axe central. La figure 2D représente une vue en trois dimensions du collimateur représenté sur la figure 2A. La figure 2E est une vue en coupe du schéma de la figure 2D, la coupe étant réalisée selon un plan passant par l'axe central du collimateur et parallèle à cet axe central.

La figure 3 représente une caractérisation d'un collimateur de géométrie similaire au collimateur représenté sur les figures 2A à 2E, et comportant 10 canaux annulaires.

La figure 4 représente une caractérisation d'un collimateur de géométrie similaire au collimateur représenté sur les figures 2A à 2E, et comportant 10 canaux annulaires, ce collimateur s'étendant selon une hauteur plus importante que le collimateur caractérisé sur la figure 3.

La figure 5 représente les principales étapes d'un procédé permettant l'analyse d'un objet avec un dispositif tel que représenté sur la figure 1A.

## EXPOSE DE MODES DE REALISATION PARTICULIERS

La figure 1A représente un exemple de dispositif d'analyse 1 d'un matériau. Une source d'irradiation 11 émet un rayonnement électromagnétique ionisant 12 se propageant vers un objet 10, dont on souhaite déterminer la composition. Le dispositif comprend un premier collimateur, ou pré-collimateur 30, apte à collimater le rayonnement émis par la source d'irradiation 11 pour former un faisceau incident collimaté $12_c$ se propageant selon un axe de propagation $12_z$ vers l'objet. Le dispositif comporte également un détecteur 20, comportant des pixels $20_{i,j}$, chaque pixel étant apte à détecter un rayonnement 14 transmis par l'objet irradié par le faisceau incident collimaté, ce rayonnement étant par exemple issu d'une diffusion élastique du rayonnement formant le faisceau incident collimaté 12c.

Le dispositif d'analyse 1 comporte un deuxième collimateur 40, interposé entre l'objet 10 et le détecteur 20. Ce collimateur s'étend autour d'un axe, dit axe central 45. Il est apte à diriger sélectivement, vers le détecteur, un rayonnement de diffusion $14_1$, $14_2$, $14_3$, $14_4$, transmis par l'objet 10, en fonction d'un l'angle $\theta_1$, $\theta_2$, $\theta_3$, $\theta_4$ de propagation de ce rayonnement par rapport à l'axe central 45. Le terme sélectivement signifie que le rayonnement transmis vers le détecteur dépend de l'angle selon lequel il se propage et de la partie de l'objet de laquelle il est émis. Ce deuxième collimateur, désigné par le terme collimateur dans la suite du texte, est un élément clef de l'invention et sera décrit plus précisément par la suite.

Le dispositif d'analyse 1 est placé dans un référentiel auquel est rattaché un repère orthogonal X, Y, Z tel que représenté sur la figure 1A. L'objet est disposé ou maintenu sur un support 10s.

Le terme rayonnement électromagnétique ionisant désigne un rayonnement électromagnétique constitué de photons d'énergie supérieure à 1 keV, et de préférence inférieure à 5 MeV. La plage d'énergie du rayonnement ionisant peut être comprise entre 1 keV et 2 MeV, mais elle s'étend le plus souvent entre 1 keV et 150 keV ou 300 keV. Le rayonnement ionisant peut être un rayonnement X ou $\gamma$. De préférence, la source de rayonnement ionisant est poly-énergétique, le rayonnement incident étant émis selon une plage d'énergie s'étendant généralement selon plusieurs dizaines voire centaines de keV. Il s'agit notamment d'un tube émetteur de rayons X.

Le détecteur de rayonnement est un détecteur comprenant des pixels $20_{i,j}$ agencés selon un plan, dit plan de détection $P_{20}$. Les indices *i, j* désignent les coordonnées de chaque pixel dans le plan de détection. Les pixels peuvent s'étendre selon une ligne mais en général, ils s'étendent selon une matrice régulière bidimensionnelle. Dans les exemples décrits dans cette demande, le plan de détection s'étend selon un plan X,Y perpendiculaire à l'axe central 45 du collimateur, ce dernier étant confondu avec l'axe de propagation $12_z$ du faisceau incident collimaté $12_c$. Cela constitue une configuration préférée.

La source d'irradiation 11 est un tube à rayons X doté d'une anode de tungstène, soumise à une tension, généralement comprise entre 40 et 150 kV que l'on peut varier afin de modifier la plage d'énergie du rayonnement incident 12. Le détecteur 20 comprend 40 pixels selon l'axe X par 40 pixels selon l'axe Y, soit 1600 pixels, chaque pixel s'étendant selon une surface de 2.5 * 2.5 mm$^2$, son épaisseur étant de 5 mm. Le matériau constituant chaque pixel est un semi-conducteur, par exemple du CdTe ou du CdZnTe ou tout autre matériau apte à réaliser des mesures spectrométriques, de préférence à température ambiante. Il pourrait également s'agir d'un matériau de type scintillateur, sous réserve d'une résolution en énergie suffisante. Le détecteur est résolu en énergie, et chaque pixel permet d'obtenir des spectres selon des canaux d'énergie de l'ordre de 1 keV. La source d'irradiation 11 peut comporter un écran métallique, par exemple du Cuivre, de façon à bloquer la propagation, vers le pré-collimateur 30, d'un rayonnement dont l'énergie est inférieure à 20 keV. Lorsque cet écran est du Cuivre, son épaisseur est par exemple égale à 0.2 mm.

Le premier collimateur 30, ou pré-collimateur, comporte un bloc de matériau dense 31, apte à absorber la quasi-totalité du rayonnement 12 émis par la source d'irradiation 11. Il comporte une fine ouverture 32, s'étendant selon un axe, dit axe de propagation $12_z$, permettant le passage d'un fin faisceau collimaté $12_c$. Par fine ouverture, on entend une ouverture dont le diamètre ou la plus grande diagonale est inférieure à 2 cm, voire à 1 cm. Dans cet exemple, l'ouverture est un cylindre de diamètre 1 mm.

L'objet 10 peut être un tissu biologique vivant, par exemple une partie du corps d'un animal ou d'un être humain. Le dispositif est alors un dispositif d'imagerie médicale. La partie du corps peut en particulier être un organe dans lequel suite à un premier examen, par exemple une radiographie ou un scanner, on suspecte la présence d'une anomalie, en particulier une tumeur cancéreuse. Ce premier examen permet également de déterminer une localisation approximative de l'anomalie dans le tissu. Le dispositif 1 peut alors être mise en oeuvre en deuxième indication, afin de caractériser la nature des tissus composant l'organe, au niveau de ladite anomalie ainsi que dans son voisinage. L'organe est notamment un organe située en périphérie du corps, de façon à permettre une analyse aisée sans être affectée par l'atténuation due à des os ou à d'autres organes. Il peut en particulier s'agir d'un sein, d'un testicule, ou d'un organe de la cavité abdominale. Dans d'autres applications, l'objet peut également être une pièce industrielle ou un bagage, le dispositif 1 étant alors utilisé à des fins de contrôle non destructif.

Chaque pixel $20_{i,j}$ constituant le détecteur de rayonnement 20, comporte :

- un matériau détecteur, apte à interagir avec les photons d'un rayonnement $14_1$, $14_2$ ...$14_n$...$14_N$ transmis par l'objet 10, à travers le deuxième collimateur 40, ce matériau étant de type scintillateur ou, de préférence, un matériau semi-conducteur compatible avec une utilisation à la température ambiante, de type CdTe, CdZnTe ;
- un circuit électronique, apte à générer un signal dont l'amplitude A dépend, et est de préférence proportionnelle, à une énergie E déposée par chaque photon interagissant dans le matériau détecteur ;
- un circuit de spectrométrie, apte à établir un spectre en énergie, noté $S_{i,j}$ des signaux détectés pendant une période temporelle, dite période d'acquisition.

Ainsi, lorsque les pixels sont disposés régulièrement selon un agencement matriciel, chaque pixel est apte à produire un spectre $S_{i,j}$ du rayonnement 14 transmis par l'objet selon cet agencement matriciel.

Le terme spectre en énergie correspond à un histogramme de l'amplitude A des signaux détectés au cours d'une période d'acquisition du spectre. Une relation entre l'amplitude A d'un signal et l'énergie E d'un rayonnement peut être obtenue par une fonction d'étalonnage en énergie g telle que E = g(A), selon des principes connus de l'homme du métier. Un spectre d'énergie $S_{i,j}$ peut donc prendre la forme d'un vecteur, dont chaque terme $S_{i,j}(E)$ représente une quantité de rayonnement détecté par le pixel $20_{i,j}$ dans une plage d'énergie $E \pm \frac{\partial E}{2}$, avec $\partial E$ étant la largeur spectrale d'un pas de discrétisation en énergie du spectre.

Le dispositif comprend également une unité de calcul, ou processeur 22, par exemple un microprocesseur, apte à traiter chaque spectre $S_{i,j}$ mesuré par les pixels $20_{i,j}$ du détecteur 20. En particulier, le processeur est un microprocesseur relié à une mémoire programmable 23 dans laquelle est stockée une séquence d'instructions pour effectuer les opérations de traitement de spectres et de calculs décrites dans cette description. Ces instructions peuvent être sauvegardées sur un support d'enregistrement, lisible par le processeur, de type disque dur, CDROM ou autre type de mémoire. Le processeur peut être relié à une unité d'affichage 24, par exemple un écran.

Le collimateur 40 comporte des canaux 42, s'étendant autour de l'axe central 45, et convergents vers ce dernier. Plus précisément, chaque canal $42_n$ est apte à transmettre un rayonnement transmis $14_n$, selon un angle de diffusion $\theta_n$ appartenant à une plage angulaire $\Delta\theta_n$ prédéterminée, le rayonnement étant transmis par l'objet 10 vers le détecteur 20.

La figure 1B représente une vue en coupe du deuxième collimateur 40, la coupe étant effectuée selon un plan XZ passant par l'axe central 45. Cet axe central s'étend selon l'épaisseur du collimateur 40, au centre de ce dernier. Le collimateur 40 s'étend entre deux plans $P_{40.1}$ et $P_{40.2}$, perpendiculaires à l'axe central 45. Ces plans définissent respectivement une première extrémité 46 et une deuxième extrémité 47 du collimateur. Il comprend des canaux $42_1$, $42_2$, $42_3$, $42_4$, chacun s'étendant entre une première extrémité $46_1$, $46_2$, $46_3$, $46_4$ et une deuxième extrémité $47_1$, $47_2$, $47_3$, $47_4$. Chaque première extrémité est destinée à être disposée face à un objet 10 à caractériser, tandis que chaque deuxième extrémité est destinée à être disposée face à un détecteur 20. De préférence, comme cela est représenté sur la figure 1B, le collimateur est disposé, face à l'objet 10, de façon telle que l'axe central 45 du collimateur 40 est confondu avec l'axe 12z du faisceau collimaté incident 12c.

Dans la suite du texte, n est un entier naturel supérieur ou égal à 1 et inférieur ou égal à N, N étant un entier strictement positif. n désigne indifféremment un canal $42_n$ du collimateur tandis que N désigne le nombre de canaux du deuxième collimateur. Il en est de même pour les parois latérales $41_n$, définies ci-dessous, ou les premières extrémités $46_n$ ou $47_n$, l'indice n se rapportant au canal $42_n$.

Chaque canal $42_n$ est délimité par au moins deux parois latérales $41_{n-1}$, $41_n$, la paroi $41_{n-1}$, dite paroi proximale, étant plus proche de l'axe central 45 que la paroi $41_n$, dite paroi distale. Ainsi, les canaux $42_1$, $42_2$, $42_3$ et $42_4$ sont respectivement délimités par les parois latérales $41_0$ et $41_1$, $41_1$ et $41_2$, $41_2$ et $41_3$, $41_3$ et $41_4$. Ces parois latérales sont réalisées selon un matériau suffisamment dense pour atténuer significativement un rayonnement électromagnétique dans la plage énergétique d'émission selon laquelle la source d'irradiation 11 émet le rayonnement incident 12. Les matériaux métalliques sont préférés, et en particulier les matériaux dont le numéro atomique est supérieur ou égal à celui du Fer (26), et de préférence supérieur ou égal à celui du Plomb (82). Les collimateurs en Plomb ou dans un alliage comportant essentiellement du Tungstène sont classiquement utilisés pour ce type d'application. L'épaisseur de ces parois est généralement inférieure à 1 cm, voire à 0.5 cm. Elle peut varier entre la première extrémité et la deuxième extrémité du collimateur 40. Chaque canal s'étendant entre les différentes parois est comblé par un matériau peu atténuant, par exemple de l'air.

Dans l'exemple représenté, les parois latérales $41_1$, $41_2$, $41_3$, $41_4$, ont une forme sensiblement tronc-conique, et s'étendent autour de l'axe central 45 du collimateur. La forme tronc-conique de chaque paroi latérale $41_n$ peut être définie par un sommet, disposé sur l'axe central 45, et par une génératrice annulaire s'étendant, au niveau de la deuxième extrémité $47_n$ d'un canal $42_n$ délimité par ladite paroi latérale, autour de l'axe central du collimateur. Ainsi, selon un plan transversal $P_{40}$, s'étendant perpendiculairement à l'axe central 45, la section transversale de chaque canal décrit une partie d'un anneau dont le centre est situé sur l'axe central. Le terme anneau désigne un anneau circulaire ou polygonal.

Dans cet exemple, le collimateur comporte une paroi centrale, dite paroi de base, $41_0$ pleine, dont le rayon extérieur délimite le canal $42_1$. Cette paroi de base s'étend entre l'axe central du collimateur et le canal le plus proche de cet axe central. Cette paroi de base est cylindrique ou tronc-conique. Elle s'étend autour de l'axe central 45, de façon à empêcher une transmission d'un rayonnement transmis par l'objet selon une direction incidente parallèle à l'axe de propagation $12_z$. Selon une variante, quel que soit le mode de réalisation, le collimateur peut comporter une paroi de base $41_0$ creuse. Dans ce cas, la paroi de base s'étend autour de l'axe central 45, en définissant un cylindre ou un cône, et délimite une cavité dont l'axe médian est l'axe central 45 du collimateur. Cela permet une mesure, par le détecteur 20, d'un spectre du rayonnement transmis par l'objet 10 se propageant selon l'axe central 45. Lorsque l'axe central du collimateur est confondu avec l'axe de propagation $12_z$ du faisceau collimaté incident 12c, cela permet une mesure, par le détecteur 20, du spectre d'un rayonnement transmis par l'objet sans avoir été dévié par ce dernier. Cela permet une estimation de l'atténuation du rayonnement collimaté $12_c$ causée par l'objet.

Chaque paroi latérale s'étend entre un rayon externe et/ou un rayon interne. Ces rayons, au niveau de la première extrémité 46 du collimateur, varient entre quelques millimètres pour la paroi la plus proche de l'axe central 45 à quelques centimètres, par exemple 1 ou 2 cm pour la paroi latérale la plus éloignée de l'axe central 45. Au niveau de la deuxième extrémité 47, ces rayons externes varient entre quelques millimètres pour la paroi la plus proche à plusieurs centimètres, par exemple 6 cm pour la paroi la plus éloignée. L'ouverture d'un canal $42_n$, c'est-à-dire la distance entre les parois latérales le délimitant, est par exemple inférieure à 1 mm au niveau de la première extrémité $46_n$, et est comprise entre 1 mm et 1 cm au niveau de la deuxième extrémité $47_n$.

Chaque canal $42_n$ s'étend, entre sa première extrémité $46_n$ et de sa deuxième extrémité $47_n$, autour d'un axe médian $44_n$. Sur la figure 1B, on a représenté les axes médians $44_1$, $44_2$, $44_3$ et $44_4$ respectivement associés aux canaux $42_1$, $42_2$, $42_3$ et $42_4$. Par axe médian, on entend un axe s'étendant le long du centre du canal, c'est-à-dire à égale distance des parois latérales délimitant ledit canal. Chaque axe médian $44_n$ d'un canal $42_n$ est incliné par rapport à l'axe central 45 du collimateur, formant ainsi un angle aigu $\theta_n$, dit angle de collimation du canal $42_n$.

Sur la figure 1B sont également représentés des canaux $42'_1$, $42'_2$, $42'_3$ et $42'_4$, dont l'angle de collimation est respectivement identique à celui des canaux $42_1$, $42_2$, $42_3$ et $42_4$. Ainsi, dans cet exemple, plusieurs canaux peuvent avoir un même angle de collimation.

Chaque axe médian $44_n$ d'un canal $42_n$ coupe l'axe central 45 du collimateur en un point $P_n$, dit point focal. Un aspect remarquable de ce collimateur est que les points focaux $P_1$, $P_2$, $P_3$, $P_4$ associés à des canaux dont les angles respectifs de collimation $\theta_1$, $\theta_2$, $\theta_3$, $\theta_4$ sont différents, sont espacés les uns des autres. Autrement dit, et c'est une différence notable par rapport à l'art antérieur, les canaux du collimateur $42_n$ s'étendent autour d'axes médians $44_n$, coupant l'axe central 45 du collimateur, de telle sorte que :

- les axes médians $44_n$, $44'_n$ de deux canaux $42_n$, $42'_n$ ayant le même angle de collimation $\theta_n$ sont sécants, et se coupent en un même point, dit point focal $P_n$ à l'angle de collimation $\theta_n$, ce point étant situé selon l'axe central 45 du collimateur ;
- les axes médians $44_n$, $44_n'$ de deux canaux $42_n$, $42_n'$ dont les angles de collimation ($\theta_n$, $\theta_n'$) sont différents, coupent l'axe central en deux points focaux $P_n$, $P_n'$ différents et situés selon l'axe central 45 du collimateur.

Chaque canal $42_n$ est apte à transmettre un rayonnement $14_n$ transmis par l'objet 10 autour d'un point focal $P_n$, ledit rayonnement se propageant selon une plage angulaire $\Delta\theta_n$ s'étendant autour de l'angle de collimation $\theta_n$ du canal. Outre l'angle de collimation $\theta_n$, cette plage angulaire dépend du diamètre du canal, ou de sa diagonale, ainsi que la longueur du canal $42_n$ entre sa première extrémité $46_n$ et sa deuxième extrémité $47_n$. Plus cette longueur est importante, plus la plage angulaire est resserrée autour de l'angle de collimation $\theta_n$. Plus l'ouverture d'un canal est faible, plus la plage angulaire est resserrée autour de l'angle de collimation $\theta_n$. L'ouverture d'un canal désigne la distance entre les deux parois latérales proximale et distale le délimitant.

Le fait que les points focaux soient espacés les uns des autres permet d'examiner simultanément différentes parties de l'objet 10. En effet, comme représenté sur la figure 1B, le collimateur 40 est disposé entre l'objet 10 et le détecteur 20, de telle sorte que tout ou partie des points focaux $P_1$, $P_2$...$P_n$...$P_N$ sont inclus dans l'objet 10. D'une façon générale, la distance entre le point focal le plus proche du collimateur et le point focal le plus éloigné du collimateur est comprise entre 1 et 100 cm selon les applications visées, et de préférence entre 2 et 50 cm. Cela correspond, sur la figure 1B, à la distance entre les points $P_1$ et $P_4$. Pour des applications sur des tissus biologiques, cette distance est comprise entre 1 cm et 10 cm, de préférence entre 2 cm et 10 cm.

La figure 1C illustre la définition d'une plage angulaire $\Delta\theta_n$ associée à un canal $42_n$. Du fait de son ouverture, ce canal est apte à transmettre un rayonnement émis (ou transmis) par l'objet selon une plage angulaire $\Delta\theta_n$ bornée par un angle de collimation minimal $\theta_n^{min}$ et un angle de collimation maximal $\theta_n^{max}$. Ces deux angles limites sont déterminés en représentant les limites $48_n$, $48'_n$ de l'angle solide $\Omega_n$ sous lequel le canal $42_n$ voit l'objet 10. L'intersection de cet angle solide $\Omega_n$ avec le faisceau incident 12c permet de définir un volume élémentaire $V_n$ de l'objet vu par le canal. Ce volume élémentaire s'étend selon une plage de coordonnées $\Delta z_n$ l'axe central 45 du collimateur, dite extension spatiale associée au canal $42_n$. Pour plus de clarté, on n'a pas représenté le faisceau incident 12c sur la figure 1C. Ce faisceau s'étend selon un axe de propagation 12z, qui est dans cet exemple coaxial de l'axe central 45 du collimateur 40.

La figure 1D représente le collimateur 40, décrit en lien avec les figures précédentes, placé entre un objet 10 et un détecteur 20. On a représenté les axes médians $44_1$, $44_2$, $44_4$ de trois canaux $42_1$, $42_2$, $42_4$, ainsi que les points focaux respectivement associés $P_1$, $P_2$, $P_4$. On a également représenté les volumes élémentaires $V_1$, $V_2$, $V_4$ de l'objet 10 adressé par chaque canal. La répartition des points focaux le long de l'axe central 45 permet de répartir les différents volumes élémentaires examinés le long de cet axe. Ainsi, en fonction du canal en face duquel ils sont placés, les pixels $20_{i,j}$ du détecteur 20 acquièrent un spectre du rayonnement diffusé représentatif de l'un ou l'autre de ces volumes élémentaires. Les canaux sont de préférence agencés de telle sorte que les volumes élémentaires se recouvrent le moins possible.

Les première et deuxième extrémités du collimateur, correspondent, dans cet exemple, respectivement aux plans $P_{40.1}$ et $P_{40.2}$, entre lesquels s'étend le collimateur 40. Elles sont distantes d'une hauteur H, dite hauteur du collimateur, généralement comprise entre 5 et 100 cm, de préférence entre 5 et 50 cm. Plus elle est élevée, plus la plage angulaire $\Delta\theta_n$ associée à chaque canal $42_n$ est étroite, ce qui améliore la résolution angulaire, mais plus le collimateur est couteux, encombrant et lourd.

La distance $d_1$ entre l'objet 10 et le collimateur 40 peut être ajustée : Elle peut être nulle, le collimateur étant au contact de l'objet. Elle peut également atteindre quelques cm, en étant usuellement inférieure à 10 cm Il en est de même pour la distance $d_2$ séparant le collimateur 40 du détecteur 20. D'une façon générale, le collimateur est disposé de telle sorte que plusieurs points focaux, et de préférence la totalité des points focaux, sont inclus dans l'objet 10. De cette façon, le détecteur 20 permet de détecter des rayonnements transmis $14_n$ provenant de différents volumes élémentaires $V_n$ de l'objet, chaque volume élémentaire s'étendant autour d'un point focal $P_n$.

Le détecteur 20 s'étend entre deux plans $P_{20.1}$ et $P_{20.2}$, de préférence perpendiculaires à l'axe central 45 du collimateur 40. Ainsi, dans cet exemple, le détecteur s'étend perpendiculairement à l'axe de propagation 12z du faisceau incident collimaté 12c. L'épaisseur $\varepsilon$ du détecteur 20 correspond à la distance entre les deux plans $P_{20.1}$ et $P_{20.2}$. Elle est généralement comprise entre 1 et 10 mm et s'élève, dans cet exemple, à 5 mm.

Chaque pixel $20_{i,j}$ du détecteur est situé à une distance R, dite distance radiale, de l'axe central 45 du collimateur. Lorsque, comme dans ce mode de réalisation, le détecteur 20 s'étend perpendiculairement à cet axe central 45, on peut définir un groupe de pixels $20_R$ comportant l'ensemble des pixels $20_{i,j}$ équidistants de l'axe central 45, et par conséquent de l'axe 12z du faisceau collimaté 12c. Un groupe de pixel $20_R$ correspond alors à des pixels $20_{i,j}$ dont la distance radiale R est identique. Du fait de la géométrie du collimateur, chaque groupe de pixels $20_R$ est associé à un élément de volume $\delta V_R$ de l'objet, correspondant à l'intersection entre l'angle solide $\delta\Omega_{i,j}$ sous lequel un pixel $20_{i,j}$ dudit groupe voit l'objet, avec le faisceau incident collimaté 12c. Cet élément de volume $\delta V_R$ est défini en fonction d'une distance z entre le détecteur et ledit élément de volume, ainsi qu'un angle de diffusion $\theta_R$.

La figure 1E représente un exemple de détecteur, comportant des pixels parallélépipédiques de dimensions 2.5 mm * 2.5 mm et d'épaisseurs $\varepsilon$ = 5 mm, agencés selon une matrice bidimensionnelle de 40 pixels par 40 pixels. On a également représenté l'axe central 45 du collimateur 40. La surface utile de détection est donc de 100 mm * 100 mm. Chaque pixel $20_{i,j}$ est relié à un circuit électronique 21 permettant la collection de signaux représentatifs de l'énergie d'un rayonnement de diffusion transmis par un canal $42_n$ situé en regard dudit pixel. On a également représenté, sur cette figure, une distance radiale R d'un pixel $20_{i,j}$. Le détecteur 20 peut être relié à un processeur 22, précédemment décrit, permettant un premier traitement consistant analyser les signaux émis par plusieurs pixels adjacents, de façon à localiser le point d'impact d'un rayonnement détecté selon une résolution spatiale inférieure au pas selon lesquels sont distribués ces pixels. Un tel traitement, connu de l'homme du métier par le terme sub-pixelisation ou sur-pixelisation, revient à former des pixels dits virtuels $20^*_{k,l}$, la surface de chaque pixel virtuel pouvant être par exemple de 1mm * 1 mm, voire de 0.5 mm par 0.5 mm. On augmente ainsi la résolution spatiale du détecteur 20.

La figure 1F représente un exemple de spectre du rayonnement 12 émis par la source d'irradiation 11. Ce spectre représente un nombre de photons (en ordonnée) en fonction de l'énergie (en abscisse). On remarque l'absence de signal significatif en dessous de 20 keV, du fait de la disposition d'un écran atténuateur de Cuivre précédemment évoqué. Les pics correspondent à des pics de fluorescence X du Tungstène. On observe que la plage spectrale de ce rayonnement émis s'étend entre 20 et 100 keV, ce qui est classique pour ce type d'analyse.

Les figures 1G et 1H représentent une coupe du collimateur 40 décrit ci-dessus, respectivement selon les plans $P_{40.1}$ et $P_{40.2}$ représentés sur la figure 1D.

Le collimateur 40 se présente sous la forme d'un assemblage de plaques comportant des ouvertures, chaque plaque pouvant avoir une épaisseur de 1mm. La dimension de chaque ouverture augmente au fur et à mesure que la plaque se rapproche du plan $P_{40.2}$. Ainsi, l'assemblage des plaques forme un collimateur, dont chaque canal est formé par les ouvertures des plaques accolées l'une à l'autre. On a représenté, sur chacune de ces figures, en pointillés blancs, chaque paroi latérale $41_1$, $41_2$, $41_3$, $41_4$. Dans cette configuration, chaque paroi latérale décrit un anneau de génératrice carrée autour de l'axe 45.

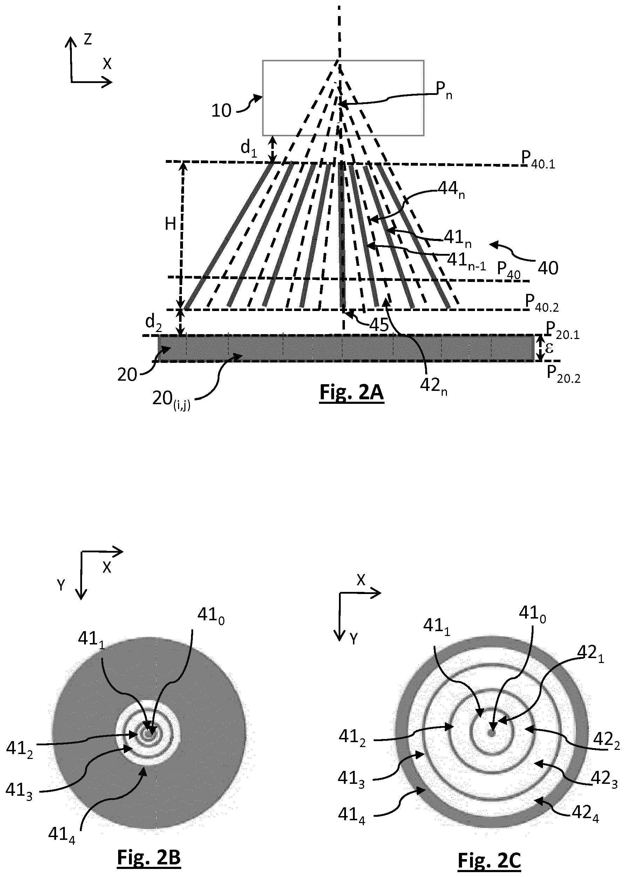

La figure 2A représente un autre mode de réalisation, selon lequel chaque canal $42_n$ du collimateur est annulaire. Ainsi, selon un plan $P_{40}$ s'étendant perpendiculairement à l'axe central 45, chaque canal présente une section transversale décrivant un anneau. L'anneau peut être de génératrice polygonale ou circulaire. Chaque axe médian $44_n$ de chaque canal $42_n$ s'étend selon une surface conique, s'étendant à égale distance des parois latérales $41_{n-1}$ et $41_n$ délimitant le canal, et dont le sommet, inclus dans l'axe central 45, correspond au point focal $P_n$. De la même façon que dans le précédent mode de réalisation, à chaque canal $42_n$ correspond un point focal $P_n$ correspondant à l'intersection entre l'axe médian $44_n$ avec l'axe central 45 du collimateur 40.

Les figures 2B et 2C représentent une vue de coupe du collimateur 40 selon les plans de coupes respectifs $P_{40.1}$ et $P_{40.2}$, entre lesquels s'étend le collimateur 40. Cela permet d'observer la section transversale annulaire de chaque canal.

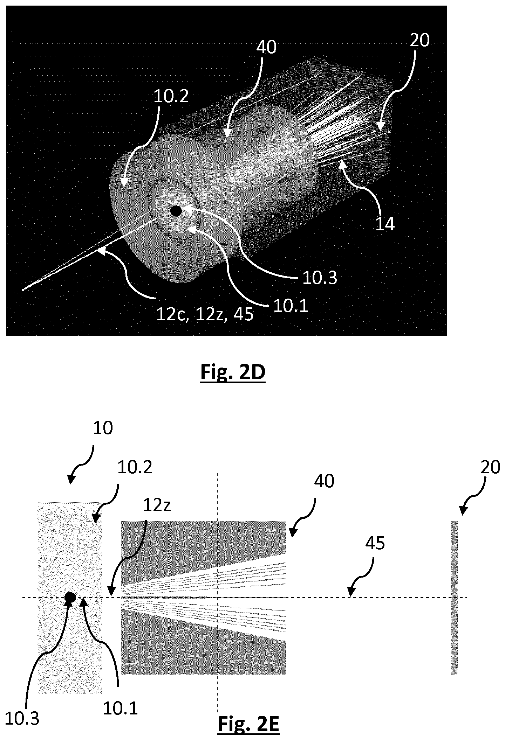

La figure 2D est une vue en perspective du dispositif représenté sur la figure 2A : on observe l'objet 10, le collimateur 40, le détecteur 20 ainsi que des rayons 14 diffusés par l'objet 10 sous l'effet de l'irradiation par le faisceau collimaté 12c. La figure 2E est une vue de coupe de la figure 2D, le plan de coupe passant par l'axe central 45 du collimateur 40 et étant parallèle à cet axe central. Dans cet exemple, l'objet est composé d'un tissu fibroglandulaire 10.1 inclus dans une matrice 10.2 correspondant à du tissu adipeux. L'objet comporte enfin un carcinome 10.3 représenté par un point noir

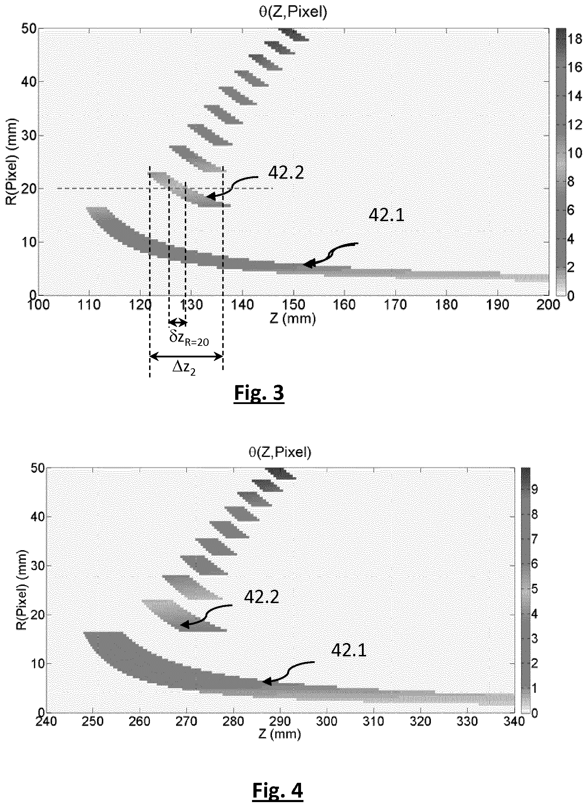

La figure 3 représente une caractérisation d'un collimateur similaire à celui représenté sur les figures 2A à 2E, comportant 10 canaux annulaires. Ce collimateur est réalisé en Dénal, essentiellement constitué de plus de 90% de Tungstène, complété par du Nickel, du Fer et du Cobalt. Il s'étend, entre un premier plan $P_{40.1}$, adjacent à l'objet et un deuxième plan $P_{40.2}$, adjacent au détecteur, selon une hauteur de 100 mm. Les premier et deuxième plans $P_{40.1}$ et $P_{40.2}$ sont disposés respectivement au contact de l'objet et du détecteur ($d_1 = d_2 = 0$). Au niveau du premier plan $P_{40.1}$, les axes médians des canaux $42_1$, $42_2$, $42_3$, $42_4$, $42_5$, $42_6$, $42_7$, $42_8$, $42_9$, $42_{10}$ sont respectivement espacés de l'axe central 45 de : 1.6 mm ; 4.3 mm ; 6 mm ; 7.5 mm ; 8.9 mm ; 10.4 mm ; 11.9 mm ; 13.4 mm ; 14.8 mm ; 16.2 mm. L'ouverture de chaque canal est égale à 0.5 mm. Au niveau du deuxième plan $P_{40.2}$, le collimateur comporte une paroi centrale (ou paroi de base) pleine, de diamètre 5mm, formant un cylindre autour de l'axe central. Il comporte également des parois latérales $41_1$, $41_2$, $41_3$, $41_4$, $41_5$, $41_6$, $41_7$, $41_8$, $41_9$, $41_{10}$, s'étendant respectivement à une distance de l'axe central 45 égale à 16.5 mm ; 23 mm ; 28 mm ; 32 mm ; 35.5 mm ; 39 mm ; 42 mm ; 45 mm ; 47.5 mm ; 50 mm.

Des calculs ont permis de déterminer la plage angulaire adressée par chaque canal $42_n$. L'axe des abscisses représente la distance z par rapport au détecteur, selon l'axe Z, le détecteur étant situé à z= 0. Les angles de diffusion sont indiqués selon l'échelle de couleur présentée en marge de cette figure. On observe qu'hormis le canal $42_1$, le plus proche de l'axe central 45 du collimateur, chaque canal $42_n$ adresse une plage angulaire $\Delta\theta_n$ s'étendant selon environ 1° pour les canaux les plus éloignés de l'axe central, à quelques degrés pour les canaux les plus proches. Par exemple, la plage angulaire associée au canal $42_2$ est comprise entre 6° et 10°. L'axe des abscisses permet de mesurer l'extension spatiale $\Delta z_n$ adressée par chaque canal $42_n$ selon l'axe central 45 du collimateur, une telle extension spatiale ayant été définie en lien avec la figure 1C. On a représenté l'extension spatiale $\Delta z_2$ correspondant au canal $42_2$. Le canal $42_1$ le plus proche du collimateur, présente une extension spatiale élevée, du fait des faibles angles adressés par ce canal, ces derniers étant compris entre quelques dixièmes de degré et 4 degrés.

Cette figure permet également de déterminer, pour chaque pixel situé à une distance radiale R de l'axe central 45, l'angle de diffusion $\theta_R$ adressé ainsi que la distance z, par rapport au détecteur, ce qui permet de définir l'élément de volume $\delta V_R$ de l'objet 10 vu par le pixel. L'axe des ordonnées représente les distances radiales R, ces dernières variant entre quelques mm (pixels les plus proches de l'axe central 45) et 50 mm, ce qui correspond à la demi-largeur du détecteur. Par exemple, chaque pixel situé à une distance radiale R = 20 mm de l'axe du collimateur 45 détecte un rayonnement de diffusion transmis par un élément de volume $\delta V_R$ de l'objet 10 situé, selon l'axe de propagation 12z du faisceau collimaté 12c, à une plage de distance $\delta z_{,R=20}$ comprise entre 126 mm et 130 mm du détecteur, ce rayonnement étant émis selon un angle de diffusion $\theta_R$ compris entre 8 et 9 °.

La figure 4 représente une modélisation analogue, réalisée en utilisant un collimateur similaire à celui décrit dans l'exemple précédent, dont la hauteur s'élève à 240 mm. Les dimensions de chaque canal, au niveau de sa première extrémité $46_n$ et de sa deuxième extrémité $47_n$, sont similaires à celles décrites dans l'exemple précédent. Ce collimateur s'étend sur une hauteur de 240 mm et est placé au contact de l'objet et du détecteur Pour chaque canal $42_n$ au-delà du premier canal $42_1$ le plus proche de l'axe central 45 du collimateur, on observe une réduction de la plage angulaire

$\Delta\theta_n$ ainsi que de l'extension spatiale $\Delta z$ selon l'axe central 45 du collimateur. On comprend qu'un tel collimateur permet un maillage plus fin de l'objet examiné, et une meilleure séparation des volumes élémentaires $V_n$ associé à chaque canal $42_n$. De même que la figure 3, cette figure permet d'appréhender l'angle de diffusion $\theta_R$ adressé ainsi que la distance z, par rapport au détecteur, définissant l'élément de volume $\delta V_R$ de l'objet vu par chaque pixel situé à une distance radiale R de l'axe du collimateur 45.

Les figures 3 et 4 montrent que selon leur distance radiale R par rapport à l'axe du collimateur 45, les différents pixels du détecteur permettent d'observer l'objet selon une profondeur totale de 30 à 40 mm, cette profondeur étant déterminée sans prendre en compte le premier canal $42_1$ le plus proche de l'axe du collimateur 45, ce dernier adressant une profondeur plus importante du fait du faible angle de collimation $\theta_1$. Cela confirme l'intérêt d'un tel collimateur, permettant de caractériser un objet selon une profondeur importante, et cela sans déplacement relatif de l'objet et du détecteur.

On va à présent décrire un procédé permettant d'analyser un objet 10 à l'aide du dispositif 1 en utilisant un collimateur tel que précédemment décrit.

De même que dans la figure 1A, le collimateur 40 est disposé de telle sorte que son axe central 45 est confondu à l'axe 12z selon lequel le faisceau incident collimaté 12c se propage. Le détecteur 20 s'étend perpendiculairement à l'axe central 45. Sous l'effet de la diffusion élastique Rayleigh, une partie du rayonnement incident 12c est diffusée selon

$$2d \sin\left(\frac{\theta}{2}\right) = n\,\frac{hc}{E} \quad (1)$$

un angle $\theta$ aigu par rapport à l'axe 12z, tel que : avec :

- d est une distance caractéristique de l'arrangement atomique ou moléculaire d'un matériau composant l'objet. Lorsque le matériau analysé est un cristal, d correspond à la distance inter-réticulaire ;
- E désigne l'énergie du rayonnement diffusé, exprimée en keV ;
- $\theta$ désigne l'angle de diffusion par rapport à la trajectoire d'un rayonnement non diffusé ;
- h et c désignent respectivement la constante de Planck et la vitesse de la lumière.

Il est courant d'exprimer une grandeur, dénommée transfert de quantité de mouvement, et représentée par la lettre $\chi$, exprimée en $nm^{-1}$, telle que :

$$\chi = \frac{\sin\left(\frac{\theta}{2}\right)E}{hc} = \frac{n}{2d} \quad (2).$$

A chaque pixel $20_{i,j}$, et à a fortiori à chaque pixel virtuel $20^*_{k,l}$ du détecteur 20 correspond un angle de diffusion $\theta$, correspondant à l'angle le plus probable d'un rayonnement de diffusion 14 atteignant le pixel. L'intérêt de la sur-pixellisation est d'aboutir à des pixels de faible taille, ce qui réduit la plage angulaire des rayonnements de diffusion susceptibles de l'atteindre. En effet, en réduisant la taille des pixels, la taille de chaque angle solide $\delta\Omega_{ij}$ sous lequel un pixel voit l'objet se réduit. La sub-pixelisation est en cela intéressante, car elle permet d'aboutir à des pixels virtuels $20^*_{k,l}$ de faible taille.

Le détecteur 20 s'étendant perpendiculairement à l'axe central 45 du collimateur 40, les pixels $20_{i,j}$ ou les pixels virtuels $20^*_{k,l}$ associés à un même angle de diffusion sont localisés selon une disposition annulaire. Ces pixels forment un groupe de pixel $20_R$, chaque pixel de ce groupe adressant un même élément de volume $\delta V_R$ de l'objet 10. Les pixels d'un même groupe de pixels sont situés à une même distance radiale R de l'axe central 45 du collimateur. L'association d'un pixel à un élément de volume désigne le fait que ce pixel reçoit un rayonnement de diffusion provenant essentiellement de cet élément de volume $\delta V_R$.

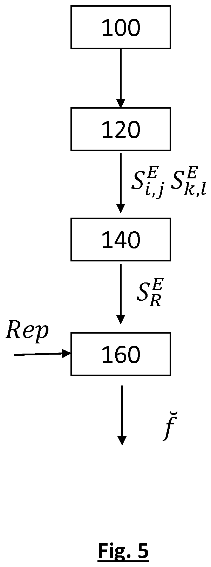

Le procédé d'analyse du matériau comprend alors les étapes suivantes, décrites en lien avec la figure 5.

a) irradiation de l'objet 10 par la source d'irradiation 11, de préférence à travers le pré-collimateur 30 permettant l'irradiation de l'objet par un faisceau incident collimaté 12c, se propageant selon un axe de propagation 12z.Cela correspond à l'étape 100 de la figure 5.

b) acquisition, par chaque pixel $20_{i,j}$ du détecteur, ou de préférence par chaque pixel virtuel $20^*_{k,l}$, d'un spectre en énergie $S^E_{i,j}$ (ou $S^E_{k,l}$ ) d'un rayonnement 14 diffusé par l'objet 10 à chaque pixel (ou à chaque pixel virtuel) étant associé un élément de volume $\delta V_R$ dans l'objet. Cela correspond à l'étape 120 de la figure 5.

c) définition d'une pluralité de groupes de pixel $20_R$, chaque groupe de pixel comportant des pixels recevant un rayonnement de diffusion provenant d'un même élément de volume $\delta V_R$ dans l'objet 10, ledit élément de volume étant disposé selon l'axe de propagation 12z, deux groupes de pixels différents $20_R$, $20_R'$ recevant un rayonnement de diffusion de deux éléments de volumes différents $\delta V_R$, $\delta V_R'$ respectivement situés à deux distances z, z' différentes par rapport au détecteur ; dans cet exemple, chaque groupe de pixel correspond aux pixels situés à une même distance radiale R de l'axe central du $S_{i,j}^E$ mat $S_{k,l}^E$ 45).

d) combinaison de chaque spectre ($S_{i,j}^E$ ou $S_{k,l}^E$ ) correspondant aux pixels ($20_{i,j}$, $20^*_{k,l}$) disposés dans chaque groupe, de façon à former un spectre en énergie $S_R^E$, dit spectre combiné, représentatif dudit groupe, à chaque spectre combiné correspondant un élément de volume $\delta V_R$ dans l'objet. Cela correspond à l'étape 140 de la figure 5. La combinaison peut être une simple addition de l'ensemble des spectres des pixels d'un même groupe.

e) à l'aide des différents spectres combinés, détermination d'une nature du matériau constituant les éléments de volume ($\delta V_R$, $\delta V_R'$) dudit objet. Cela correspond à l'étape 160 de la figure 5

A chaque élément de volume $\delta V_R$ peut être associée une distance z par rapport au détecteur. Chaque élément de volume $\delta V_R$ est disposé selon l'axe de propagation 12z du faisceau collimaté incident 12c. A chaque élément de volume $\delta V_R$ correspond un angle de diffusion $\theta_R$, correspondant l'angle sous lequel se propage un rayonnement de diffusion entre l'élément de volume $\delta V_R$ et chaque pixel du groupe de pixel. Le procédé permet alors de remonter à la nature des matériaux constituant les éléments de volume $\delta V_R$, s'étendant selon différentes distances z par rapport au détecteur.

L'étape 160 peut être mise en oeuvre comme suit : cette étape suppose l'établissement d'une matrice de réponse, notée *Rep,* rassemblant les spectres obtenus par chaque pixel, situé à une distance radiale R de l'axe central du collimateur, lorsqu'un matériau *i* est situé à une distance z du détecteur. Chaque terme *Rep* (*E*, *R*, *z*, *i*) de cette matrice représente une quantité de photons détectés à l'énergie E par un pixel situé à une distance radiale R de l'axe central du collimateur, lorsqu'un matériau *i* est situé à une distance z du détecteur. La matrice de réponse comprend $N_E{}^*N_R$ lignes et $N_z{}^*N_i$ colonnes, où $N_E$, $N_R$, $N_z$ et $N_i$ désignent respectivement le nombre de canaux en énergie de chaque spectre, le nombre de distances radiales R, le nombre de distances z et le nombre de matériaux *i* considérés.

Les différents spectres combinés $S_R^E$, obtenus selon $N_R$ distances radiales R par rapport à l'axe central du collimateur, peuvent être concaténés pour constituer un vecteur S, dit spectre global, de dimension $N_E{}^*N_R$. Chaque terme *S(E,R)* du vecteur S représente une quantité de photons détectés, à l'énergie *E*, par un pixel situé à une distance radiale R de l'axe central du collimateur.

Le procédé vise à déterminer une proportion *f(z,i)* du matériau *i* à la distance z du détecteur, c'est-à-dire déterminer un vecteur des proportions *f*, de dimension ($N_z{}^*N_i$, 1) dont chaque terme est une proportion *f(z,i)*.

Ainsi, S = *Rep* $\times$ *f*, (3) où $\times$ désigne le produit matriciel, chaque terme *S(E,R)* du vecteur *S* étant tel que : $S(E,R) = \sum_{z,i} Rep(E, R, z, i) \cdot f(z, i)$ (4)

La matrice *Rep* est déterminée au cours d'une étape de calibration, réalisée :

- soit à l'aide de mesures expérimentales, l'objet étant remplacé par des matériaux étalons connus;
- soit par simulation, en utilisant des codes de calcul simulant le transport de photons dans la matière ;
- soit en combinant des mesures expérimentales et des simulations.

Une telle étape de calibration est une procédure classique.

Les vecteurs S, *f* et la matrice *Rep* sont explicités ci-dessous :

$$S\,(E,R) = \begin{bmatrix} S_{R=Rmin}^E(Emin) \\ \vdots \\ S_{R=Rmax}^E(Emax) \end{bmatrix}; f\,(z,i) = \begin{bmatrix} f(zmin,imin) \\ \vdots \\ f(zmax,imax) \end{bmatrix};$$

$$Rep =$$

$$\begin{bmatrix} Rep(E=Emin,R=Rmin,z=zmin,i=imin) & \cdots & Rep(E=Emin,R=Rmin,z=zmax,i=imax) \\ \vdots & \ddots & \vdots \\ Rep(E=Emax,R=Rmax,z=zmin,i=imin) & \cdots & Rep(E=Emax,R=Rmax,z=zmax,i=imax) \end{bmatrix}$$

où Emin, Rmin, *zmin, imin* désignent respectivement les indices minimums de *E, R,* z et *i*, et *Emax, Rmax, zmax, imax* désignent respectivement les indices maximums de *E, R, z* et *i*.

Ayant déterminé la matrice de réponse *Rep,* et ayant obtenu le spectre global S à partir des mesures, on peut obtenir une estimation $\hat{f}$ du vecteur des compositions *f* à l'aide d'un algorithme d'inversion. Parmi les algorithmes d'inversion itératifs couramment utilisé, on peut utiliser un algorithme de type MLEM, acronyme anglais signifiant « Maximum Likelihood Expectation Maximization ». Selon un tel algorithme, la valeur de chaque terme du vecteur $\check{f}^n$ peut être obtenue selon l'expression suivante :

$$\check{f}^q(z,i) = \check{f}^{q-1}(z,i) \frac{1}{\sum_{E,R} Rep(E,R,z,i)} \sum_{E,R} \frac{Rep(E,R,z,i) \cdot S(E,R)}{\sum_{Z,i} Rep(E,R,z,i) \cdot \check{f}^{q-1}(z,i)} \quad (5)$$

l'exposant q désignant le rang de chaque itération.

Selon un mode de réalisation, le procédé comporte une étape de changement de variable, ou chaque spectre $S_{i,j}^E$ est converti en un spectre représentant une distribution du transfert de quantité de mouvement $S_{i,j}^\chi$, en suivant l'équation (2), l'angle $\theta$ correspondant à l'angle $\theta$ associé au pixel $20_{i,j}$ (ou le cas échéant au pixel virtuel $20*_{k,l}$). Un tel spectre n'est pas un spectre en énergie, mais demeure bien un spectre représentatif de la distribution en énergie dudit rayonnement détecté.

L'invention pourra être utilisée pour la fourniture de données nécessaires à l'établissement d'un diagnostic. Par exemple, elle pourra être mise en oeuvre sur des zones suspectes préalablement mises en évidence par une modalité d'imagerie de type radiographie X, tomographie X, échographie ou IRM. Cela permet d'obtenir une caractérisation in-vivo de tissus considérés comme suspects, et d'éviter le recours à des techniques plus invasives, et plus traumatisantes, telles les biopsies. Le fait de disposer d'un a priori sur la localisation permet de se concentrer sur les zones suspectes et de limiter la dose intégrée par le patient. En effet, à l'aide d'un tel a priori, le dispositif peut être utilisé de telle sorte que l'axe du faisceau collimaté $12_z$ passe par la zone suspecte préalablement déterminée.

L'invention pourra également être mise en oeuvre dans d'autres applications de contrôle non destructif de matériaux : contrôle de bagage, détection de matériaux illicites, contrôle de l'intégrité de structures.

## Revendications

1. Dispositif d'analyse (1) d'un objet (10), comportant :

- une source d'irradiation (11), apte à produire un rayonnement électromagnétique (12) ionisant se propageant jusqu'à un support ($10_s$) apte à recevoir ledit objet (10) ;
- un premier collimateur (30), disposé entre la source d'irradiation et le support ($10_s$), le premier collimateur présentant une ouverture (32) apte à former un faisceau collimaté ($12_c$) se propageant selon un axe de propagation ($12_z$), vers le support ($10_s$) ;
- un détecteur (20), comprenant des pixels ($20_{i,j}$, $20*_{kl}$), chaque pixel étant apte à détecter un rayonnement électromagnétique ionisant, et à en former un spectre en énergie $(S_{i,j}^E, S_{k,l}^E)$;
- un deuxième collimateur (40), disposé entre le support ($10_s$) et le détecteur (20), le deuxième collimateur étant apte à diriger sélectivement un rayonnement émis ($14_n$) par ledit objet, maintenu par le support ($10_s$), vers le détecteur, en fonction d'un angle de diffusion ($\theta_n$) dudit rayonnement ($14_n$) émis par l'objet ;

**caractérisé en ce que**

le deuxième collimateur (40) s'étend, entre une première extrémité (46) et une deuxième extrémité (47), autour d'un axe central (45), le deuxième collimateur comportant une pluralité de canaux ($42_n$), chaque canal étant délimité par des parois latérales ($41_{n-1}$, $41_n$), le deuxième collimateur étant tel que :

- chaque canal ($42_n$) comporte un axe médian ($44_n$), ledit axe médian s'étendant, au centre du canal, entre lesdites parois latérales délimitant ledit canal ;
- l'axe médian de chaque canal ($42_n$) forme un angle aigu ($\theta_n$), dit angle de collimation du canal, avec l'axe central (45) du collimateur ;
- à chaque canal ($42_n$) est associé un point ($P_n$), dit point focal, formé par une intersection entre l'axe médian ($44_n$) dudit canal et ledit axe central (45) du collimateur ;

le deuxième collimateur comportant au moins deux canaux ($42_n$, $42_n'$), dont les angles de collimation ($\theta_n, \theta_n'$) sont différents, les points focaux ($P_n$, $P_n'$) respectivement associés à ces canaux étant différents et espacés l'un de l'autre selon ledit axe central (45), de telle sorte que chaque canal ($42_n$) transmet au détecteur un rayonnement ($14_n$) émis par un volume élémentaire ($V_n$) de l'objet, disposé sur le support, s'étendant autour d'un point focal

$(P_1...P_N)$ défini par le deuxième collimateur, selon une plage angulaire prédéterminée $(\Delta\theta_n)$.

2. Dispositif (1) selon la revendication 1, dans lequel le deuxième collimateur comporte une pluralité de canaux de même angle de collimation $(\theta_n)$, les canaux s'étendant autour de l'axe central (45) du collimateur, les points focaux $(P_n)$ desdits canaux étant confondus.

3. Dispositif (1) selon l'une quelconque des revendications précédentes, dans lequel au moins un canal présente une section transversale dans un plan $(P_{40})$ perpendiculaire à l'axe central (45), ladite section transversale formant tout ou partie d'un anneau autour de l'axe central (45).

4. Dispositif (1) selon la revendication 3, dans lequel l'anneau est circulaire ou polygonal.

5. Dispositif (1) selon l'une quelconque des revendications précédentes, dans lequel au moins deux points focaux sont espacés, selon ledit axe central (45) du collimateur, d'une distance supérieure à 2 cm.

6. Dispositif (1) selon l'une quelconque des revendications précédentes, dans lequel chaque paroi latérale $(41_{n-1}, 41_n)$ délimitant un canal $(42_n)$ du deuxième collimateur est réalisée selon un matériau dont le numéro atomique est supérieur à 26.

7. Dispositif (1) selon l'une quelconque des revendications précédentes, dans lequel chaque canal $(42_n)$ du deuxième collimateur étant délimité par une paroi latérale dite proximale $(41_{n-1})$ et une paroi latérale dite distale $(41_n)$, la paroi proximale $(41_{n-1})$ étant plus proche de l'axe central (45) que la paroi distale $(41_n)$, chacune de ces parois s'étend, entre une première extrémité du canal $(46_n)$ et une deuxième extrémité du canal $(47_n)$, en formant une surface tronconique définie :

   - par un sommet, situé sur l'axe central (45) ;
   - et, au niveau de ladite deuxième extrémité $(47_n)$ du canal, par une génératrice décrivant un tout ou partie d'un anneau.

8. Dispositif (1) l'une quelconque des revendications précédentes, dans lequel le deuxième collimateur comporte une paroi dite de base $(41_0)$, s'étendant autour de l'axe central (45) en décrivant un cylindre ou un tronc de cône, d'épaisseur supérieure à 5 mm.

9. Dispositif (1) selon l'une quelconque des revendications précédentes, dans lequel le deuxième collimateur (40) est disposé de telle sorte que son axe central (45) est coaxial de l'axe de propagation $(12_z)$ du faisceau incident collimaté $(12_c)$.

10. Dispositif (1) selon l'une quelconque des revendications précédentes, dans lequel le détecteur (20) s'étend selon un plan $(P_{20})$ perpendiculaire audit axe central (45) du deuxième collimateur.

11. Dispositif (1) selon l'une quelconque des revendications précédentes, dans lequel le détecteur (20) est relié à un microprocesseur (22) apte à subdiviser chaque pixel $(20_{i,j})$ du détecteur en pixels virtuels $(20^*_{k,l})$, et dans lequel plusieurs pixels ou pixels virtuels sont disposés dans le prolongement d'un même canal $(42_n)$.

12. Procédé de caractérisation d'un objet (10) à l'aide d'un dispositif selon l'une quelconque des revendications précédentes, comprenant les étapes suivantes :

   a) disposition de l'objet (10) sur le support (10s) du dispositif et irradiation de l'objet à l'aide de la source d'irradiation (11), de façon à former un faisceau incident collimaté $(12_c)$ se propageant vers l'objet (10) selon un axe de propagation $(12_z)$, l'objet étant disposé de telle sorte que plusieurs points focaux $(P_1...P_N)$, définis par le deuxième collimateur (40), soient placés dans ledit objet ;
   b) à l'aide de chaque pixel $(20_{i,j}, 20^*_{k,l})$ du détecteur (20), détection d'un rayonnement diffusé par l'objet (10) suite à son irradiation par ledit faisceau incident collimaté $(12_c)$ et formation d'un spectre représentatif de la distribution en énergie du rayonnement détecté $(S^E_{i,j}, S^E_{k,l})$ ;
   c) définition d'une pluralité de groupes de pixels $(20_R)$, chaque groupe de pixel recevant un rayonnement de diffusion d'un même élément de volume $(\delta V_R)$ dudit objet (10), ledit élément de volume étant disposé selon l'axe de propagation ($12_z$), deux groupes de pixels différents ($20_R$, $20_R$') recevant un rayonnement de diffusion de deux éléments de volumes différents ($\delta V_R$, $\delta V_R$') ;

d) pour chaque groupe de pixel défini lors de l'étape précédente, combinaison du spectre acquis par chaque pixel, de façon à établir un spectre dit spectre combiné ($S_R^E$) associé audit groupe de pixel ;

e) à l'aide des spectres combinés ($S_R^E$) respectivement associés à différents groupes de pixels ($20_R$), détermination d'une nature du matériau constituant chaque élément de volume ($\delta V_R$, $\delta V_R$') de l'objet (10).

13. Procédé selon la revendication 12, dans lequel

- l'axe central du deuxième collimateur (45) est confondu avec l'axe de propagation ($12_z$) du faisceau collimaté ($12_c$) ;
- le détecteur (20) s'étend perpendiculairement à l'axe du collimateur (45), chaque groupe de pixel comportant des pixels situés à une même distance, dite distance radiale (R) dudit axe central du collimateur (45).

14. Procédé selon la revendication 12 ou la revendication 13, dans lequel la direction du faisceau incident collimaté ($12_z$) est définie à partir d'un a priori résultant d'une inspection préalable de l'objet.

15. Procédé selon la revendication 14, dans lequel l'inspection préalable est réalisée par radiographie X ou tomographie X ou échographie ou Imagerie par Résonnance Magnétique.


**Patentansprüche**

1. Vorrichtung zur Analyse (1) eines Objekts (10), umfassend:

- eine Strahlungsquelle (11), die geeignet ist, eine ionisierende elektromagnetische Strahlung (12) zu erzeugen, die sich bis zu einem Träger ($10_s$) ausbreitet, der geeignet ist, das Objekt (10) aufzunehmen;
- einen ersten Kollimator (30), der zwischen der Strahlungsquelle und dem Träger ($10_s$) angeordnet ist, wobei der erste Kollimator eine Öffnung (32) aufweist, die geeignet ist, ein kollimiertes Bündel ($12_c$) zu bilden, das sich entlang einer Ausbreitungsachse ($12_z$) zu dem Träger ($10_s$) ausbreitet;
- einen Detektor (20), umfassend Pixel ($20_{i,j}$, $20^*_{k,l}$), wobei jedes Pixel geeignet ist, eine ionisierende elektromagnetische Strahlung zu erfassen und daraus ein Energiespektrum ($S^E_{i,j}$, $S^E_{k,l}$) zu bilden;
- einen zweiten Kollimator (40), der zwischen dem Träger ($10_s$) und dem Detektor (20) angeordnet ist, wobei der zweite Kollimator geeignet ist, selektiv eine von dem vom Träger ($10_s$) gehaltenen Objekt entsandte Strahlung ($14_n$) zu dem Detektor zu leiten, in Abhängigkeit von einem Diffusionswinkel ($\theta_n$) der von dem Objekt entsandten Strahlung ($14_n$);

**dadurch gekennzeichnet, dass**

- sich der zweite Kollimator (40) zwischen einem ersten Ende (46) und einem zweiten Ende (47) um eine Zentralachse (45) erstreckt, wobei der zweite Kollimator eine Vielzahl von Kanälen ($42_n$) umfasst, wobei jeder Kanal von Seitenwänden ($41_{n-1}$, $41_n$) begrenzt ist, wobei der zweite Kollimator derart ist, dass:
- jeder Kanal ($42_n$) eine Mittelachse ($44_n$) umfasst, wobei sich die Mittelachse in der Mitte des Kanals zwischen den den Kanal begrenzenden Seitenwänden erstreckt;
- die Mittelachse jedes Kanals ($42_n$) einen spitzen Winkel ($\theta_n$), Kollimationswinkel des Kanals genannt, mit der Zentralachse (45) des Kollimators bildet;
- jedem Kanal ($42_n$) ein Punkt ($P_n$), Fokalpunkt genannt, zugeordnet ist, der von einem Schnittpunkt zwischen der Mittelachse ($44_n$) des Kanals und der Zentralachse (45) des Kollimators gebildet ist;

wobei der zweite Kollimator mindestens zwei Kanäle ($42_n$, $42_n$') umfasst, deren Kollimationswinkel ($\theta_n$, $\theta_n$') unterschiedlich sind, wobei die Fokalpunkte ($P_n$, $P_n$'), die diesen Kanälen jeweils zugeordnet sind, unterschiedlich und voneinander entlang der Zentralachse (45) entfernt sind, so dass jeder Kanal ($42_n$) an den Detektor eine Strahlung ($14_n$) überträgt, die von einem Elementarvolumen ($V_n$) des auf dem Träger angeordneten Objekts entsandt wird, das sich um einen durch den zweiten Kollimator definierten Fokalpunkt ($P_1$ ... $P_N$) entlang eines vorbestimmten Winkelbereichs ($\Delta\theta_n$) erstreckt.

**2.** Vorrichtung (1) nach Anspruch 1, bei der der zweite Kollimator eine Vielzahl von Kanälen mit demselben Kollimationswinkel ($\theta_n$) umfasst, wobei sich die Kanäle um die Zentralachse (45) des Kollimators erstrecken, wobei die Fokalpunkte ($P_n$) der Kanäle zusammenfallen.

**3.** Vorrichtung (1) nach einem der vorhergehenden Ansprüche, bei der mindestens ein Kanal einen Querschnitt in einer Ebene ($P_{40}$) senkrecht auf die Zentralachse (45) aufweist, wobei der Querschnitt die Gesamtheit oder einen Teil eines Ringes um die Zentralachse (45) bildet.

**4.** Vorrichtung (1) nach Anspruch 3, bei der der Ring kreisförmig oder mehreckig ist.

**5.** Vorrichtung (1) nach einem der vorhergehenden Ansprüche, bei der mindestens zwei Fokalpunkte entlang der Zentralachse (45) des Kollimators um einen Abstand von mehr als 2 cm voneinander entfernt sind.

**6.** Vorrichtung (1) nach einem der vorhergehenden Ansprüche, bei der jede Seitenwand ($41_{n-1}$, $41_n$), die einen Kanal ($42_n$) des zweiten Kollimators begrenzt, aus einem Material hergestellt ist, dessen Atomzahl größer als 26 ist.

**7.** Vorrichtung (1) nach einem der vorhergehenden Ansprüche, bei der jeder Kanal ($42_n$) des zweiten Kollimators durch eine so genannte proximale Seitenwand ($41_{n-1}$) und eine so genannte distale Seitenwand ($41_n$) begrenzt ist, wobei die proximale Wand ($41_{n-1}$) der Zentralachse (45) näher ist als die distale Wand ($41_n$), wobei sich jede dieser Wände zwischen einem ersten Ende des Kanals ($46_n$) und einem zweiten Ende des Kanals ($47_n$) erstreckt, wobei eine kegelstumpfartige Fläche gebildet wird, die definiert ist durch:

- einen Scheitel, der sich auf der Zentralachse (45) befindet;
- und im Bereich des zweiten Endes ($47_n$) des Kanals eine Mantellinie, die die Gesamtheit oder einen Teil eines Ringes beschreibt.

**8.** Vorrichtung (1) nach einem der vorhergehenden Ansprüche, bei der der zweite Kollimator eine so genannte Basiswand ($41_0$) umfasst, die sich um die Zentralachse (45) erstreckt, wobei sie einen Zylinder oder einen Kegelstumpf beschreibt und eine Dicke von über 5 mm aufweist.

**9.** Vorrichtung (1) nach einem der vorhergehenden Ansprüche, bei der der zweite Kollimator (40) derart angeordnet ist, dass seine Zentralachse (45) koaxial zur Ausbreitungsachse ($12_z$) des eintreffenden kollimierten Bündels ($12_c$) ist.

**10.** Vorrichtung (1) nach einem der vorhergehenden Ansprüche, bei der sich der Detektor (20) entlang einer Ebene ($P_{20}$) senkrecht auf die Zentralachse (45) des zweiten Kollimators erstreckt.

**11.** Vorrichtung (1) nach einem der vorhergehenden Ansprüche, bei der der Detektor (20) mit einem Mikroprozessor (22) verbunden ist, der geeignet ist, jedes Pixel ($20_{i,j}$) des Detektors in virtuelle Pixel ($20^*_{k,l}$) zu unterteilen, und bei der mehrere Pixel oder virtuelle Pixel in der Verlängerung eines selben Kanals ($42_n$) angeordnet sind.

**12.** Verfahren zur Kennzeichnung eines Objekts (10) mit Hilfe einer Vorrichtung nach einem der vorhergehenden Ansprüche, umfassend die folgenden Schritte:

a) Anordnen des Objekts (10) auf dem Träger ($10_s$) der Vorrichtung und Bestrahlen des Objekts mit Hilfe der Strahlungsquelle (11), um ein eintreffendes kollimiertes Bündel ($12_c$) zu bilden, das sich zu dem Objekt (10) entlang einer Ausbreitungsachse ($12_z$) ausbreitet, wobei das Objekt derart angeordnet ist, dass mehrere von dem zweiten Kollimator (40) definierte Fokalpunkte ($P_1 \dots P_N$) in dem Objekt angeordnet sind;
b) mit Hilfe jedes Pixels ($20_{i,j}$, $20^*_{k,l}$) des Detektors (20) Erfassen einer von dem Objekt (10) nach seiner Bestrahlung mit dem eintreffenden kollimierten Bündel ($12_c$) verbreiteten Strahlung und Bilden eines Spektrums, das für die Energieverteilung der erfassten Strahlung ($S^E_{i,j}$, $S^E_{k,l}$) repräsentativ ist;
c) Definieren einer Vielzahl von Pixelgruppen ($20_R$), wobei jede Pixelgruppe eine Diffusionsstrahlung eines selben Volumenelements ($\delta V_R$) des Objekts (10) empfängt, wobei das Volumenelement entlang der Ausbreitungsachse ($12_z$) angeordnet ist, wobei zwei unterschiedliche Pixelgruppen ($20_R$, $20_{R'}$) eine Diffusionsstrahlung von zwei unterschiedlichen Volumenelementen ($\delta V_R$, $\delta V_{R'}$) empfangen;
d) für jede in dem vorhergehenden Schritt definierte Pixelgruppe Kombinieren des durch jedes Pixel erfassten Spektrums, um ein Spektrum, kombiniertes Spektrum ($S^E_R$) genannt, zu erstellen, das der Pixelgruppe zugeordnet ist;
e) mit Hilfe der kombinierten Spektren ($S^E_R$), die jeweils verschiedenen Pixelgruppen ($20_R$) zugeordnet sind, Bestimmen einer Natur des Materials, aus dem jedes Volumenelement ($\delta V_R$, $\delta V_{R'}$) des Objekts (10) besteht.

13. Verfahren nach Anspruch 12, bei dem

- die Zentralachse des zweiten Kollimators (45) mit der Ausbreitungsachse ($12_z$) des kollimierten Bündels ($12_c$) zusammenfällt;
- sich der Detektor (20) senkrecht auf die Achse des Kollimators (45) erstreckt, wobei jede Pixelgruppe Pixel umfasst, die sich in einem selben Abstand, Radialabstand (R) genannt, zu der Zentralachse des Kollimators (45) befinden.

14. Verfahren nach Anspruch 12 oder Anspruch 13, bei dem die Richtung des eintreffenden kollimierten Bündels ($12_z$) aus einer a priori Resultierenden einer vorherigen Inspektion des Objekts definiert wird.

15. Verfahren nach Anspruch 14, bei dem die vorherige Inspektion durch Röntgen-Radiografie oderTomografie oder Echografie oder Magnetresonanzbildgebung durchgeführt wird.


**Claims**

1. Device (1) for analysing an object (10), including:

- a radiation source (11) able to produce ionizing electromagnetic radiation (12), the radiation propagating towards a holder ($10_s$) able to receive the object (10);
- a first collimator (30), placed between the radiation source and the holder ($10_s$), the first collimator having an aperture (32) able to form a collimated beam ($12_c$) propagating along a propagation axis ($12_z$) towards the holder ($10_s$);
- a detector (20), comprising pixels ($20_{i,j}$, $20^*_{kl}$), each pixel being able to detect ionizing electromagnetic radiation and to form therefrom an energy spectrum $(S_{i,j}^E, S_{k,l}^E)$;
- a second collimator (40), placed between the holder ($10_s$) and the detector (20), the second collimator being able to selectively direct radiation emitted ($14_n$) by said object, which is held by the holder ($10_s$), towards the detector, depending on a scattering angle ($\theta_n$) of said radiation ($14_n$) emitted by the object;

**characterized in that**

the second collimator (40) extends, between a first end (46) and a second end (47), around a central axis (45), the second collimator including a plurality of channels ($42_n$), each channel being bounded by lateral walls ($41_{n-1}$, $41_n$), the second collimator being such that:

- each channel ($42_n$) has a median axis ($44_n$), the median axis extending, in the centre of the channel, between said lateral walls bounding the channel;
- the median axis of each channel ($42_n$) makes an acute angle ($\theta_n$), called the collimating angle of the channel, with the central axis (45) of the collimator;
- with each channel ($42_n$) is associated a point ($P_n$), called the focal point, formed by an intersection between the median axis ($44_n$) of said channel and said central axis (45) of the collimator;

the second collimator including at least two channels ($42_n$, $42_n'$), the collimating angles ($\theta_n$, $\theta_n'$) of which are different, the focal points ($P_n$, $P_n'$) respectively associated with these channels being different and spaced apart from each other along said central axis (45) such that each channel ($42_n$) transmits to the detector radiation ($14_n$) emitted by an elementary volume ($V_n$) of the object, which is placed on the holder, extending around a focal point ($P_1...P_N$) defined by the second collimator, in a preset angular range ($\Delta\theta_n$).

2. Device (1) according to Claim 1, wherein the second collimator includes a plurality of channels having the same collimating angle ($\theta_n$), the channels extending around the central axis (45) of the collimator, the focal points ($P_n$) of said channels being coincident.

3. Device (1) according to either of the preceding claims, wherein at least one channel has a cross section in a plane ($P_{40}$) perpendicular to the central axis (45), said cross section forming all or part of a ring around the central axis (45).

**EP 3 163 582 B1**

4. Device (1) according to Claim 3, wherein the ring is circular or polygonal.

5. Device (1) according to any one of the preceding claims, wherein at least two focal points are spaced apart, along said central axis (45) of the collimator, by a distance larger than 2 cm.

6. Device (1) according to any one of the preceding claims, wherein each lateral wall ($41_{n-1}$, $41_n$) bounding a channel ($42_n$) of the second collimator is produced from a material the atomic number of which is higher than 26.

7. Device (1) according to any one of the preceding claims, wherein each channel ($42_n$) of the second collimator being bounded by a lateral wall called the proximal wall ($41_{n-1}$) and a lateral wall called the distal wall ($41_n$), the proximal wall ($41_{n-1}$) being closer to the central axis (45) than the distal wall ($41_n$), each of these walls extends, between a first end of the channel ($46_n$) and a second end of the channel ($47_n$), in such a way as to form a frustoconical area defined:

   - by an apex, located on the central axis (45);
   - and, at said second end ($47_n$) of the channel, by a generatrice describing all or some of a ring.

8. Device (1) according to any one of the preceding claims, wherein the second collimator includes what is called a base wall ($41_0$) extending around the central axis (45) and describing a cylinder or conical frustum, of thickness larger than 5 mm.

9. Device (1) according to any one of the preceding claims, wherein the second collimator (40) is placed such that its central axis (45) is coaxial with the propagation axis ($12_z$) of the collimated incident beam ($12_c$).

10. Device (1) according to any one of the preceding claims, wherein the detector (20) extends in a plane ($P_{20}$) perpendicular to said central axis (45) of the second collimator.

11. Device (1) according to any one of the preceding claims, wherein the detector (20) is connected to a microprocessor (22) able to subdivide each pixel ($20_{i,j}$) of the detector into virtual pixels ($20^*_{k,l}$), and wherein a plurality of pixels or virtual pixels are placed in the extension of a given channel ($42_n$).

12. Method for characterizing an object (10) using a device according to any one of the preceding claims, comprising the following steps:

   a) placing the object (10) on the holder (10s) of the device and irradiating the object using the irradiation source (11), so as to form a collimated incident beam ($12_c$) propagating towards the object (10) along a propagation axis ($12_z$), the object being placed such that a plurality of focal points ($P_1...P_N$), which are defined by the second collimator (40), are placed in said object;
   b) using each pixel ($20_{i,j}$, $20^*_{k,l}$) of the detector (20), detecting radiation scattered by the object (10) following its radiation by said collimated incident beam ($12_c$) and forming a spectrum representative of the energy distribution of said detected radiation $(\bar{S}_{i,j}^E , S_{k,l}^E)$;
   c) defining a plurality of groups of pixels ($20_R$), each group of pixels receiving radiation scattered by a given volume element ($\delta V_R$) of said object (10), said volume element being located on the propagation axis ($12_z$), two different groups of pixels ($20_R$, $20_R$') receiving radiation scattered by two different volume elements ($\delta V_R$, $\delta V_R$');
   d) for each group of pixels defined in the preceding step, combining the spectrum acquired by each pixel, so as to establish a spectrum, call $(S_R^E)$ combined spectrum $(\bar{S}_R^E)$, associated with said group of pixels; and
   e) using the combined spectra $(S_R^E)$ respectively associated with various groups of pixels ($20_R$), determining a nature of the material constituting each volume element ($\delta V_R$, $\delta V_R$') of the object (10).

13. Method according to Claim 12, wherein

   - the central axis of the second collimator (45) is coincident with the propagation axis ($12_z$) of the collimated beam ($12_c$); and
   - the detector (20) extends perpendicularly to the axis of the collimator (45), each group of pixels including pixels located at the same distance, called the radial distance (R) from said central axis of the collimator (45).

14. Method according to Claim 12 or Claim 13, wherein the direction of the collimated incident beam ($12_z$) is defined on the basis of knowledge considered to be gained by prior inspection of the object.

15. Method according to Claim 14, wherein said prior inspection is carried out by x-ray radiography, or x-ray tomography, or echography, or magnetic resonance imaging.

**Fig. 1A**

**Fig. 1B**

**Fig. 1C**

**Fig. 1D**

**Fig. 1E**

**Fig. 1F**

**Fig. 1G**

**Fig. 1H**

**Fig. 2A**

**Fig. 2B**

**Fig. 2C**

**Fig. 2D**

**Fig. 2E**

θ(Z,Pixel)

**Fig. 3**

θ(Z,Pixel)

**Fig. 4**

100

120

$S_{i,j}^{E} \; S_{k,l}^{E}$

140

$S_{R}^{E}$

$Rep$

160

$\breve{f}$

**Fig. 5**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013098520 A
- US 7835495 B2

**Littérature non-brevet citée dans la description**

- **MALDEN.** A CdZnTe array for détection of explosives in baggage by energy-dispersive X-ray diffraction signatures at multiple scatter angles. *Nuclear Instruments and Method in Physics Research A,* 2000
- **KIDANE,G et al.** X-ray scatter signatures for normal and neoplastic breast tisse. *Physics in Medicine and Biology,* 1999, vol. 44, 1791-1802